# EUROPEAN PATENT APPLICATION

(11) **EP 4 534 408 A1**
(43) Date of publication of application: **09.04.2025**
(21) Application number: 24197211.6
(22) Date of filing: 29.08.2024
(51) Int. Cl.: B64C 1/14, B64D 45/00

(54) **BARRIER CENTER LATCH WITH DELAYED OVER-RIDE FEATURE**

(30) Priority: 02.10.2023 US 202363541967 P; 24.06.2024 US 202418751495
(71) Applicant: The Boeing Company, Arlington, VA 22202 (US)
(72) Inventor: Nunes, Daniel Bryan, Arlington, VA, 22202 (US); Smith, Gregory Staton, Arlington, VA, 22202 (US); Rhynard, Steven Ellis, Arlington, VA, 22202 (US); Haj-Musa, Hakeem, Arlington, VA, 22202 (US); Finerty, Sean Michael, Arlington, VA, 22202 (US); Addis, Paul, Arlington, VA, 22202 (US); Warren, Daniel Paul, Arlington, VA, 22202 (US); Near, Nathan Lee, Arlington, VA, 22202 (US); Kim, Kyong S., Arlington, VA, 22202 (US)
(74) Representative: Hoffmann Eitle

(57) **Abstract**

A barrier door system configured to be positioned at an opening within an interior of an aircraft. The barrier door system comprises a door that is movable between a stowed position away from the opening and a deployed position that extends across the opening. A lock is mounted to the door and configured to lock the door in the deployed position with the lock configured to be immediately movable from a locked position to an unlocked position from a forward side of the door and to delay moving from the locked position to the unlocked position from a rear side of the door.

## Description

### TECHNOLOGICAL FIELD

The present disclosure relates generally to the field of aircraft and, more specifically, to a barrier door configured to control movement of persons through an opening within the interior of the aircraft.

### BACKGROUND

Aircraft have a flight deck that includes flight instruments, instrument panels, and various controls that enable the flight personnel to operate the aircraft. The flight deck is positioned towards the front of the aircraft and is usually a separate compartment away from the cabin area where passengers sit during flight. A flight deck door further separates the flight deck from the cabin area.

The flight deck door is closed and locked during flight. This allows the flight personnel to concentrate on operating the aircraft and prevents entry of unauthorized persons onto the flight deck. However, the flight deck door may be opened during flight for various reasons. One occurrence is when flight personnel use the lavatory which is located in the cabin area of the aircraft. Other occurrences are when food and/or drinks that are prepared in the galley of the cabin area are delivered to the flight personnel on the flight deck, and when flight personnel leave the flight deck during a break.

Opening of the flight deck door could present an opportunity for an un-authorized person to gain entry to the flight deck.

A physical barrier system is needed that would inhibit and/or sufficiently delay a person in the cabin area from reaching the flight deck door when the flight deck door is open. The delay in their movement towards the flight deck would allow the flight deck door to be closed and locked prior to the person reaching the door.

### SUMMARY

One aspect is directed to a barrier door system configured to be positioned at an opening within an interior of an aircraft. The barrier door system comprises a door that is movable between a stowed position away from the opening and a deployed position that extends across the opening. A lock is mounted to the door and configured to lock the door in the deployed position with the lock configured to be immediately movable from a locked position to an unlocked position from a forward side of the door and to delay moving from the locked position to the unlocked position from a rear side of the door.

In another aspect, the lock is immediately movable from the unlocked position to the locked position from the forward side of the door.

In another aspect, the lock is immediately movable from the unlocked position to the locked position from the rear side of the door.

In another aspect, the lock comprises a rotary mechanism with a gear-reduction and rack/pinion structure with a handle on the rear side of the door that requires multiple rotations to rotate the rotary mechanism to move from the locked position to the unlocked position.

In another aspect, the lock comprises a removable cover plate on the rear side of the door that extends over a handle configured to move the lock from the locked position to the unlocked position with the cover plate is mounted to the door by one or more removable fasteners.

In another aspect, the cover plate comprises a slot and the handle is visible through the slot in the unlocked position.

In another aspect, the lock comprises: a slide bolt that is movable relative to the door between a locked position and an unlocked position; a handle that is attached to the slide bolt and movable with the slide bolt along a slide axis; a first rotary member that is rotatable relative to the door, the rotary member comprising a slot; and a second rotary member that is connected to the first rotary member, wherein rotation of the second rotary member causes the first rotary member to rotate relative to the door between a misaligned rotational orientation with the slot misaligned with the slide axis and an aligned rotational orientation with the slot aligned with the slide axis.

In another aspect, the handle is unable to move along the slide axis when the first rotary member is in the misaligned rotational orientation.

In another aspect, the handle is a first handle and extends on the rear side of the door and further comprising a second handle that extends on a forward side of the door.

In another aspect, the second rotary member is mounted to the rear side of the door and the first rotary member and the slide bolt are mounted within the door.

In another aspect, the first rotary member is biased towards the misaligned rotational orientation.

In another aspect, a cover plate is hingedly mounted to the rear side of the door with the cover plate movable between a closed position that extends over the second rotary member and an open position away from the second rotary member.

In another aspect, one or more latching rods are connected to the lock with the one or more latching rods configured to move based on the lock with the latching rods in an extending position that extends outward from the door with the lock in the locked position and a retracted position within the door with the lock is in the unlocked position.

In another aspect, the lock comprises a strike override feature comprising a strike configured to breakaway to move the lock from the locked position to the unlocked position.

In another aspect, the door comprises a plurality of panels that are pivotally connected together and the lock extends between two of the panels to lock the panels together in the locked position.

In another aspect, the plurality of panels are movable between a folded configuration and an extended configuration.

One aspect is directed to a barrier door system configured to be positioned at an opening within an interior of an aircraft. The barrier door system comprises a door comprising a first panel and a second panel with the door movable between a stowed position away from the opening and a deployed position that extends across the opening. A lock is mounted to the door with the lock comprising one or more forward lock elements positioned at a forward side of the door and one or more rear lock elements positioned at a rear side of the door. Wherein each of the one or more forward lock elements and the one or more rear lock elements are configured to move the lock between a locked position and an unlocked position. Wherein the one or more forward lock elements are configured to move the lock from the locked position to the unlocked position faster than the one or more rear lock elements.

In another aspect, the one or more forward lock elements are configured to move the lock from the locked position to the unlocked position without a delay.

In another aspect, the lock further comprises a slide bolt that is movable relative to the first panel and the second panel.

One aspect is directed to a barrier door system configured to be positioned at an opening within an interior of an aircraft. The barrier door system comprises a door comprising a forward side that faces towards a flight deck of the aircraft and a rear side that faces towards a cabin area of the aircraft. A lock is mounted to the door with the lock comprising: one or more forward lock elements that are exposed on the forward side of the door and configured to move the lock from a locked position to an unlocked position; one or more rear lock elements on the rear side of the door and configured to move the lock from the locked position to the unlocked position; and a shield positioned on the rear side of the door that extends over the one or more rear lock elements wherein the shield is movable between a first position to prevent operation of the one or more rear lock elements and a second position to enable operation of the one or more rear lock elements.

One example is directed to a barrier door system configured to be positioned at an opening within an interior of an aircraft, the barrier door system comprising a door that is movable between a stowed position away from the opening and a deployed position that extends across the opening. A lock is mounted to the door and configured to lock the door in the deployed position with the lock configured to be immediately movable from a locked position to an unlocked position from a forward side of the door and to delay moving from the locked position to the unlocked position from a rear side of the door.

In another example, the lock is further configured to be immediately movable from the unlocked position to the locked position from the forward side of the door.

In another example, the lock is further configured to be immediately movable from the unlocked position of the locked position from the forward side of the door.

In another example, the lock comprises a rotary mechanism with a gear-reduction and rack/pinion structure with a handle on the rear side of the door that requires multiple rotations to rotate the rotary mechanism to move from the locked position to the unlocked position.

In another example, the lock comprises a removable cover plate on the rear side of the door that extends over a handle configured to move the lock from the locked position to the unlocked position, wherein the cover plate is mounted to the door by one or more removable fasteners.

In another example, the cover plate comprises a slot and the handle is accessible through the slot in the unlocked position.

In another example, the lock comprises a resettable feature that is biases the lock towards the locked position.

In another example, the lock comprises a rotary member with a slot and a handle that is attached to a slide bolt, wherein the rotary member is rotatable relative to the door to align the slot in an unlocking orientation to allow the handle to slide within the slot and move the lock from the locked position to the unlocked position.

In another example, the rotary member is biased towards a locked position with the slot positioned away from the unlocking orientation.

In another example, a cover plate is configured to be positioned over the rotary member.

In another example, the lock comprises a slide bolt and one or more latching rods.

In another example, the lock comprises a slide bolt that moves back and forth along a first axis and latching rods that move back and forth perpendicular to the first axis.

In another example, the lock comprises a strike override feature comprising a strike configured to breakaway to move the lock from the locked position to the unlocked position.

In another example, the lock comprises a strike override feature with a rotary hook.

In another example, the door comprises a plurality of panels that are pivotally connected together and the lock extends between two of the panels to lock the panels together in the locked position.

One example is directed to a barrier door system configured to be positioned at an opening within an interior of an aircraft. The barrier door system comprises a door comprising a first panel and a second panel with the door is movable between a stowed position away from the opening and a deployed position that extends across the opening. A lock is mounted to the door and configured to lock the door in the deployed position with the lock comprising a locked position that locks the two panels together and an unlocked position that unlocks the two panels. The lock is configured to be immediately moved from the locked position to the unlocked position from a forward side of the door and to delay moving from the locked position to the unlocked position from a rear side of the door.

One example is directed to a barrier door system configured to be positioned at an opening within an interior of an aircraft. The barrier door system comprises a door comprising a forward side that faces towards a flight deck of the aircraft and a rear side that faces towards a cabin area of the aircraft. A lock is mounted to the door and configured to lock the door in a deployed position across the opening with the lock comprising one or more forward elements configured to immediately unlock the lock and one or more rear elements configured to delay unlocking the lock.

One example is directed to a method of operating a barrier door within an interior of an aircraft. The method comprises locking the door in a deployed position that extends across an opening in the interior of the aircraft; and unlocking the door from one of a forward side of the door and a rear side of the door. Unlocking the door from the forward side comprises grasping a first portion of the lock that is exposed on the forward side of the door and unlocking the door. Unlocking the door from the rear side comprises grasping a second portion of the lock that is exposed on the rear side of the door and unlocking the door. Unlocking the door from the forward side is faster than unlocking the door from the rear side.

One example is directed to a method of operating a barrier door within an interior of an aircraft. The method comprises: locking the door in a deployed position that extends across an opening in the interior of the aircraft; and unlocking the door from one of a forward side of the door and a rear side of the door. Unlocking the door from the forward side comprises moving a first lock element on the forward side of the door and unlocking the door. Unlocking the door from the rear side comprises initially moving one or more delaying elements and then moving a second lock element on the rear side of the door and unlocking the door. Unlocking the door from the forward side is faster than unlocking the door from the rear side.

One aspect is directed to a method of operating a barrier door within an interior of an aircraft. The method includes locking the door in a deployed position that extends across an opening in the interior of the aircraft. The method also includes unlocking the door from one of a forward side of the door and a rear side of the door. Unlocking the door from the forward side includes grasping a first portion of the lock that is exposed on the forward side of the door and unlocking the door. Unlocking the door from the rear side includes grasping a second portion of the lock that is exposed on the rear side of the door and unlocking the door. Unlocking the door from the forward side is faster than unlocking the door from the rear side.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is an isometric view of an aircraft.
Figure 2 is a top schematic diagram of an interior of an aircraft with a barrier door system mounted at an opening.
Figure 3A is a schematic diagram of forward facing lock elements.
Figure 3B is a schematic diagram of rear facing lock elements.
Figure 4 is a schematic diagram of a lock with a reduction gear assembly.
Figure 5A is a rear view of a lock having rear lock elements and with a plate positioned over a handle.
Figure 5B is a rear view of the lock of Figure 5A with the plate in an open position and the handle exposed.
Figure 6A is a schematic rear view of a lock having a cover that extends over a handle
Figure 6B is a schematic top view of the lock of Figure 6A.
Figures 7, 8A and 8B are schematic rear view of a lock with rotary members configured to unlock the lock from the rear side of the door.
Figure 9 is a schematic rear view of a lock having latching rods.
Figures 10A and 10B are schematic rear views of a lock configured to enable the door to fold when the lock is in a locked position.
Figure 11A, 11B, and 11C are schematic rear views of a lock configured to enable the door to fold when the lock is in a locked position.

### DETAILED DESCRIPTION

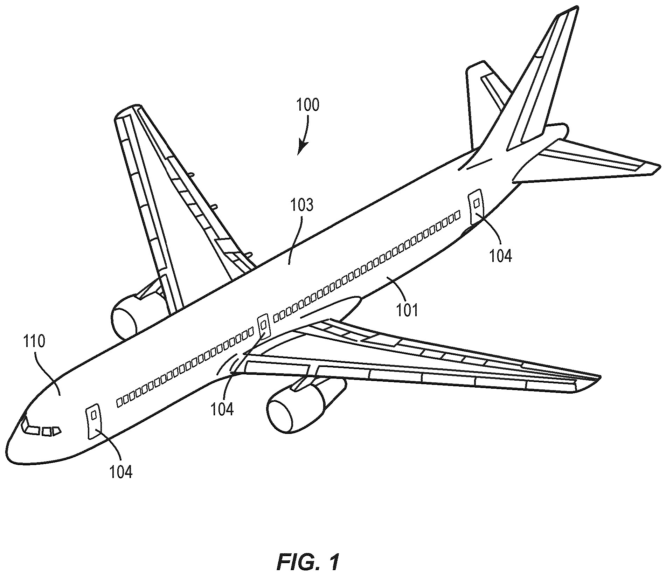

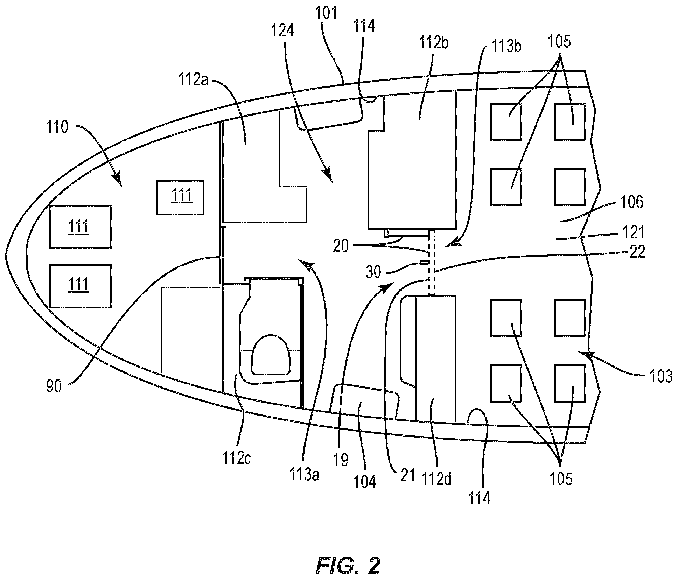

Figures 1 and 2 illustrate an aircraft 100 configured to transport passengers. The aircraft 100 includes a fuselage 101 with a flight deck 110 positioned at the front and a cabin area 103 positioned rearward. The cabin area 103 is equipped for accommodating the passengers. The size of the flight deck 110 and the cabin area 103 can vary depending upon the aircraft 100. One or more exterior doors 104 provide for passengers and the flight personnel to enter and exit the fuselage 101.

The flight deck 110 includes one or more seats 111 for flight personnel including but not limited to the pilot, co-pilot, and other authorized persons. Various controls and instrument panels (not illustrated) are located for use by the flight personnel to control the aircraft 100.

The cabin area 103 is positioned along the fuselage 101 rearward of the flight deck 110. The cabin area 103 includes a passenger section 121 with seats 105 arranged in rows along one or more aisles 106. In some examples such as a commercial airline, the seats 105 extend throughout the cabin area 103. In other examples in which the aircraft 100 is used for cargo transport, a limited number of seats 105 are positioned in the cabin area 103.

Monuments 112 are mounted to the structural members of the aircraft 100 within the fuselage 101. The monuments 112 are shaped and sized for a function with examples including but not limited to galleys, lavatories, walls, and stowage units. In some examples, the monuments 112 are shaped and sized to extend from the floor to the ceiling of the cabin area 103, and between a wall 114 of the fuselage 101 to an aisle 106.

In some examples, the cabin area 103 includes a vestibule 120 positioned between the flight deck 110 and the passenger section 121. In some examples, the vestibule 120 is positioned at one of the exterior doors 104 and includes space to allow for passengers to enter and exit the aircraft 100. Additionally or alternatively, the vestibule 120 provides an area for flight personnel to sit during takeoff and landing, for the flight personnel to prepare food/drinks, and for passengers to access a lavatory. Figure 2 includes the vestibule 120 having a pair of galley monuments 112a, 112b, a lavatory monument 112c, and a stowage monument 112d. In other examples, the cabin area 103 does not include a vestibule with the passenger section 121 including the seats 105 extending directly behind the flight deck 110.

One or more openings 113 form walkways for passengers and flight personnel to move within the cabin area 103. In some examples as illustrated in Figure 2, the openings 113 are formed between the monuments 112. Figure 2 illustrates a layout with a pair of openings - opening 113a formed closer to the flight deck 110 and opening 113b closer to the passenger section 121. Other examples include openings 113 formed between various components, such as monuments 112, walls 114 of the fuselage 101, and seats 105.

A flight deck door 90 separates the flight deck 110 from the cabin area 103. In some examples the flight deck door 90 separates the flight deck 110 from the vestibule 120. The flight deck door 90 prevents unauthorized persons from entering the flight deck 110 from the cabin area 103. The flight deck door 90 can include a lock to secure the door 90 in the closed position.

The present application is directed to a barrier door system 19 positioned at an opening 113. The barrier door system 19 includes a door 20 that is movable between stowed position (shown in solid lines in Figure 2) to allow a person to move through the opening 113, and a deployed position (shown in dashed lines in Figure 2) that extends across the opening 113. A lock 30 is mounted to the door 20 and configured to lock the door in the deployed position. The lock 30 is configured to be locked from a forward side 21 or a rear side 22 of the door 20. The lock 30 is further configured to be unlocked faster from the forward side 21 than from a rear side 22 of the door 20. In some examples, the lock 30 is configured to be immediately moved from the locked position to the unlocked position from the forward side 21. In other examples, there is a delay when unlocking the lock 30 from the forward side 21. In the various examples, the lock 30 can be unlocked faster from the forward side 21 than from the rear side 22.

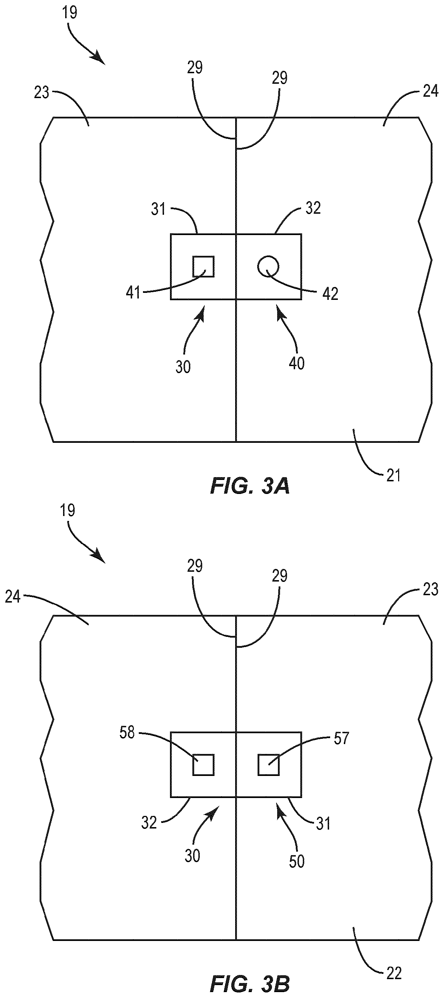

Figures 3A and 3B generally illustrate the barrier door system 19 that includes the door 20 and the lock 30. The door 20 includes a forward side 21 shown in Figure 3A and a rear side 22 shown in Figure 3B. The lock 30 secures the door 20 in the deployed position across the opening. The lock 30 includes one or more elements 40 that are accessible from the forward side 21 of the door 20 (referred to as forward lock elements 40) that are actuated to immediately lock and unlock the lock 30. The lock 30 also includes one or more elements 50 that are accessible from the rear side 22 of the door 20 (referred to as rear lock elements 50) that are actuated to unlock the lock 30 in a delayed manner. In some examples, the elements 50 on the rear side 22 are configured to immediately lock the lock 30.

The door 20 includes two or more sections that are locked together in the deployed position. In some examples as illustrated in Figures 3A and 3B, the sections are panels 23, 24 that are pivotally connected together along inner edges 29. The panels 23, 24 are constructed from a rigid material (e.g., composite material, plastic) and have a fixed shape. The panels 23, 24 can include various shapes and sizes including rectangular as shown. In some examples, the panels 23, 24 are sized to extend across the entire opening 113 such that there are no gaps when in the deployed position. In other examples, one or more small gaps are formed along the outer edges of the panels 23, 24.

The door 20 is movable between the stowed and deployed positions. In some examples, the door 20 is pivotally mounted to one or more of a door frame, wall of the opening 113, monument 112, ceiling, and floor. In some examples, the panels 23, 24 are folded in an overlapping configuration in the stowed position.

The lock 30 secures the door 20 in the deployed position (i.e., locks the door). In some examples as illustrated in Figure 3A, the lock 30 includes one or more first components 31 mounted to the first panel 23 and one or more second components 32 mounted to the second panel 24. The first and second components 31, 32 are configured to engage together to lock the lock 30 and disengage to unlock the lock 30. The lock 30 can include a variety of different elements. In some examples, the lock 30 includes the first component 31 being a slide bolt mounted to panel 23 and the second component 32 being a receptacle positioned in panel 24. The slide bolt is movable into and out of the receptacle to lock and unlock the lock 30. In another example, the first component 31 is a latch rotably mounted to panel 23 and the second component 32 is a catch mounted to 24. The latch is rotated to engage and disengage with the latch to lock and unlock the lock 30.

The lock 30 includes one or more forward lock elements 40 that are accessible on the forward side 21 of the door 20. Figure 3A includes an example with two forward lock elements 41, 42, with other examples including fewer or more elements. The forward lock elements 40 provide for moving the lock 30 between the locked and unlocked positions. The action of the forward lock elements 40 provides for movement of the one or more components 31, 32 and unlocking of the lock 30.

The lock 30 includes one or more rear lock elements 50 that are accessible on the rear side 22 of the door 20. Figure 3B includes an example with two rear lock elements 57, 58, with other examples including fewer or more elements. The rear lock elements 50 provide for moving the components between the locked and unlocked positions. The action of the rear lock elements 50 provides for unlocking the lock in a delayed manner relative to the front side 21. In some examples, the action of the rear lock elements 50 provides for immediately locking the lock 30.

The lock 30 can include various configurations with a variety of different rear lock elements 50 that provide for a delay in unlocking the lock 30 from the rear side 22 relative to the front side 21.

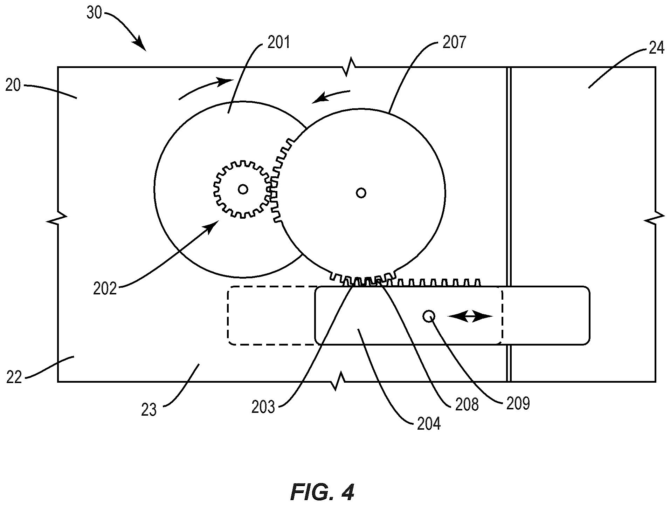

Figure 4 is a schematic rear side of a lock 30 mounted within a door 20 having panels 23, 24. The lock includes a bolt 204 that is movable relative to the panels 23, 24 between a first position recessed within panel 23 and a second position that extends into panel 24. The lock 30 includes a rotatory mechanism with a gear-reduction and rack/pinon structure. The rear lock elements 50 include a handle 201 that is accessible to a user on the rear side 22 of the door 20. The lock 30 also includes a reduction gear assembly 202 that engages with the handle 201 and also engages with a rack 203 on the bolt 204. The reduction gear assembly 202 includes a gear train with multiple gears that engage together. Gear 207 of the gear train includes teeth 208 that engage the rack 203 on the bolt 204. In some examples, the reduction gear assembly 202 and the bolt 204 are mounted within the door 20.

The reduction gear assembly 202 is configured to require many rotations of the handle 201 to drive the reduction gear assembly 202 and rotate the gear 207 to move the bolt 204 from a locked position that extends into the panel 24 to an unlocked position with the bolt 204 recessed in panel 23 and away from panel 24. The multiple rotations of the handle 201 takes time that enables flight personnel to secure the flight deck 110 before a person from the cabin area 103 can move through the opening 113. In some examples, forward lock elements 40 include a handle 209 that is accessible from the forward side 21 of the door 20. The handle 209 can be grasped by a user to immediately slide the bolt 204 between the locked and unlocked positions.

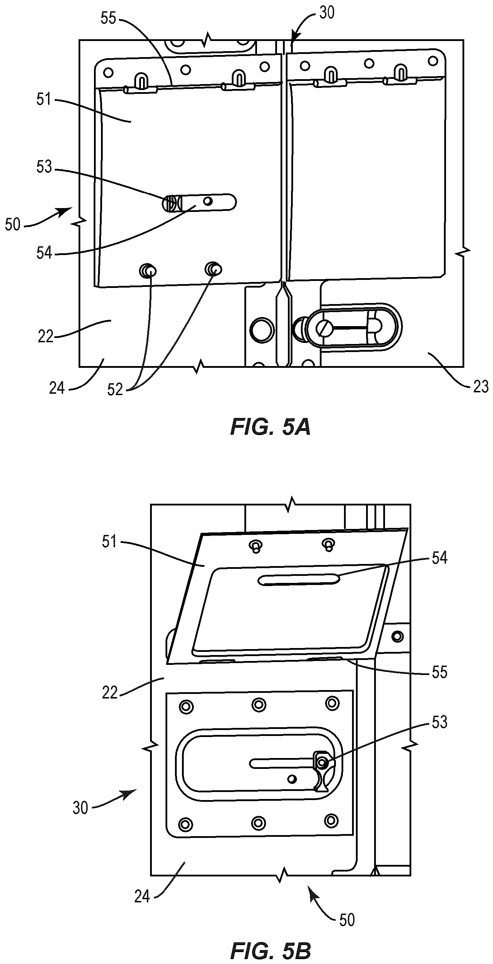

In another example of Figures 5A and 5B, the lock 30 includes a bolt (not illustrated) mounted in panel 24. The bolt is movable between a locked position that extends outward from the panel 24 and into the receptacle of the panel 23, and an unlocked with the bolt recessed within the panel 24. The forward lock element 40 includes a handle (not illustrated) attached to the bolt to enable flight personnel to slide the bolt immediately between the locked and unlocked positions.

The lock 30 also includes rear lock elements 50. The rear lock element 50 includes a handle 53 connected to and that extends out from the bolt. A plate 51 is mounted to the panel 24 and includes a slot 54 that aligns with the handle 53. Threaded fasteners 52 secure the plate 51 over the handle 53.

The handle 53 can be moved along the slot 54 to slide the bolt to the locked position. In the locked position, the handle 53 is not accessible through the slot 54. In the locked position, the handle 53 plate 51 may be slightly visible or may be positioned under the plate 51. To unlock the lock 30, the fasteners 52 are removed to pivot the plate 51 about a hinge 55 and uncover the handle 53 as illustrated in Figure 5B. Once removed, the plate 51 is pivoted about a hinge 55 to access the handle 53. The handle 53 can then be manipulated to move the bolt and unlock the lock 30.

The fasteners 52 include threads to engage with the panel 24. Removal of the fasteners 52 requires the person to unscrew each of the fasteners 52. This process is time consuming thus enabling flight personnel to secure the flight deck 110. The number of fasteners 52 that secures the plate 51 can vary. Examples range from between a single fastener 52 to multiple fasteners 52. In examples with multiple fasteners 52, the fasteners 52 may be the same or different.

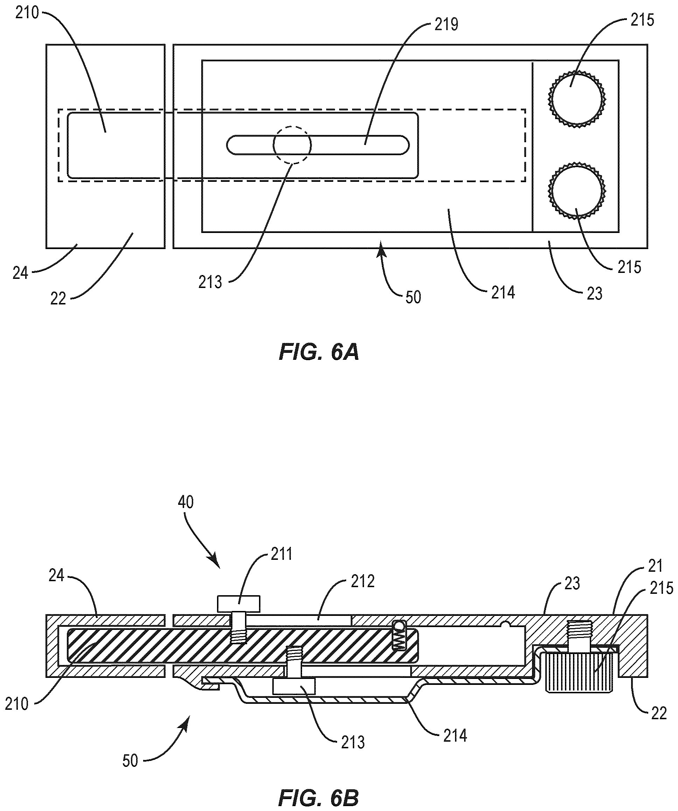

Figures 6A-6B illustrate a similar concept. The lock 30 includes a bolt 210 that slides between the locked and unlocked positions. The forward lock elements 40 include a handle 211 attached to the bolt 210. The handle 211 is positioned within a slot 212 that allows for the flight personnel to slide the bolt 30 between the locked and unlocked positions. The rear lock elements 50 include a handle 213. A cover 214 is positioned over the handle 213 and secured to the rear side 22 of the door 20 with one or more fasteners 215. The cover 214 prevents access to the handle 213. In some examples, a slot 219 in the cover 214 enables a person to see the handle 213 but is not large enough for the user to grasp and move the handle 213. A user is required to unscrew the fasteners 215 to remove the cover 214. Once removed, the user can slide the handle 213 to unlock the lock 30.

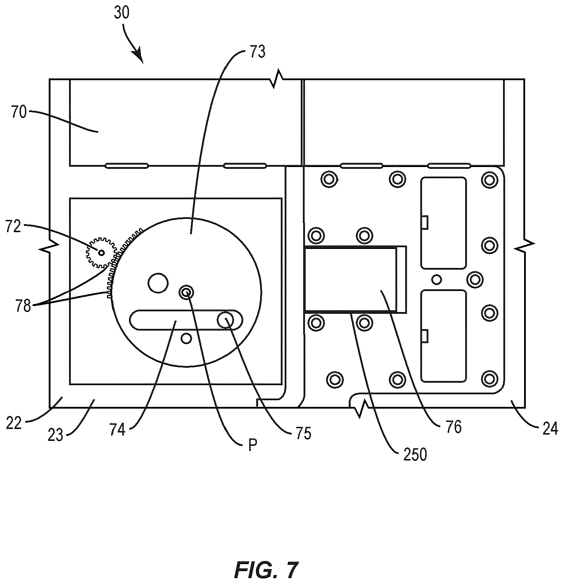

Figure 7 illustrates a rear side 22 of a lock 30 mounted to a first panel 23 and a receptacle 250 positioned in a second panel 24. A portion of the components of the lock 30 are positioned within the interior of the panels 23, 24. Figure 7 illustrates the components exposed to enable viewing of components of the lock 30 which are mostly embedded in the panels 23, 24.

The lock 30 includes a bolt 76 that is slidable between a locked position that extends into the receptacle 250 (as illustrated in Figure 7) and an unlocked position that is away from the receptacle 250. A first handle (not illustrated) extends outward from the forward side of the bolt 76 and is accessible on the forward side 21 of the door 20 for immediately locking and unlocking. A second handle 75 extends outward from the rear side of the bolt 76 and is positioned to be accessed on the rear side 22 of the door 20. The lock 30 also includes rotary members 72, 73 that include gear teeth 78 that mesh together.

During use, rotation of rotary member 72 results in rotation of rotary member 73 about a point P. Rotary member 73 further includes a slot 74 configured to align with the handle 75. In some examples, the rotary member 72 is exposed on the rear side 22 with the rotary member 73 and bolt 76 embedded within the interior of the door 20. In other examples, both rotary members 72, 73 are exposed on the rear side 22.

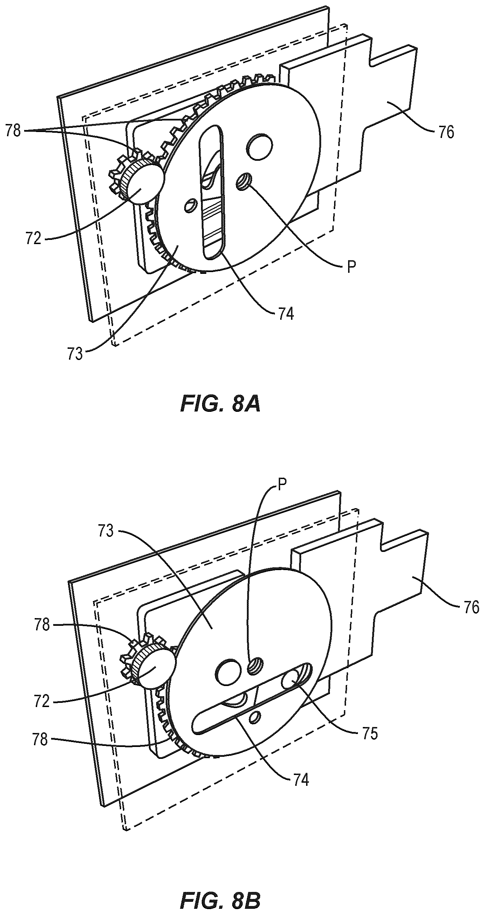

The handle 75 on the sliding bolt 76 has a path of movement when moving between the locked and unlocked positions. In the locked position, the lock 30 is prevented from being unlocked from the rear side 22 by positioning the rotary member 73 at a rotational position with the slot 74 misaligned with the path of movement as illustrated in Figure 8A. This misalignment prevents a user from sliding the handle 75 and bolt 76 and unlocking the lock. In some examples, the rotary member 73 is positioned over the handle 75 and prevents a user from accessing and sliding the handle 75 and bolt 76.

To unlock the door 20 from the rear side 22, the rotary member 72 is rotated. Rotation of the rotary member 72 causes a ratcheting motion of the rotary member 73 which in turn causes the slot 74 to align with the path of movement of the handle 75 on the sliding bolt 76. Once the slot 74 is aligned with the path of movement as illustrated in Figures 7 and 8B, the handle 75 can be moved by the person to move the bolt 76 to an unlocked position. In some examples, the handle 75 is not visible on the rear side 22 when the slot 74 is misaligned with the path of movement. Rotation of the rotary member 72 causes the handle 75 to become visible when the slot 74 is aligned with the path of movement.

In some examples, the ratcheting feature between the rotary members 72, 73 is constrained to only allow a few degrees of rotation at a time. This constraint results in the user rotating the member 72 multiple rotations which takes an extended time period (e.g., 5-10 seconds) before the slot 74 is aligned with the path of movement of the handle 75.

In some examples, the ratcheting feature is pre-loaded with a spring. Once the bolt 76 is slid from the unlocked position to the locked position, the rotary member 73 is rotated to position the slot 74 out of alignment with the path of movement of the handle 75.

In some examples, a cover 70 is hingedly connected to the rear side 22 of the door 20. The cover 70 is closed and extends over the rotary member 72 thus preventing access. The cover 70 is first pivoted away from the lock 30 to provide a user with access to the rotary member 72. In some examples, the cover 70 is fastened in the closed position with one or more fasteners that must be removed prior to pivoting the cover 70 to the open position. Removal of the fasteners provides additional time to unlock the door 20. In some examples, a spring on the cover 70 causes the rotary member 73 to rotate for when the cover 70 is moved to the closed position. The spring rotates the rotary member 73 and moves the slot 74 out of alignment with the travel path of the handle 75.

In some examples, the rotary member 72 is exposed on the rear side 22 of the door 20. The rotary member 73 and bolt 76 are embedded within the door 20.

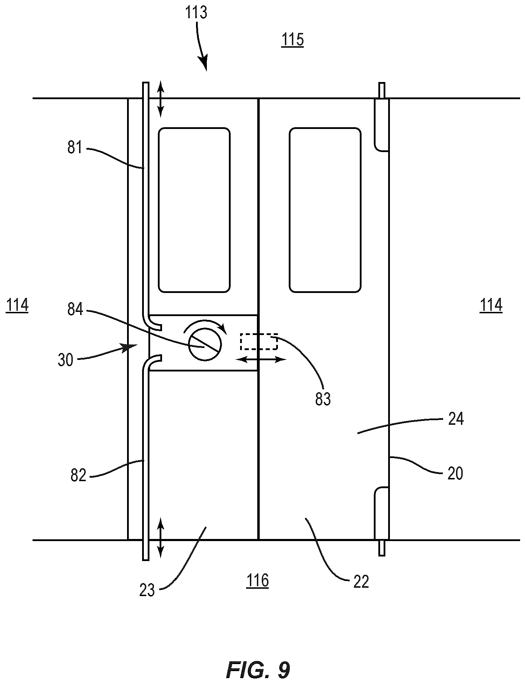

In some examples, the lock 30 includes one or more latching rods that engage with the ceiling and/or floor at the opening 113. The latching rods are movable between extended positions to lock in position and retracted positions to unlock. Figure 9 illustrates a rear side 22 of the door 20. The door 20 includes panels 23, 24 and is in a deployed position across an opening 113 formed between adjacent walls 114, a ceiling 115, and a floor 116. The lock 30 includes a bolt 83 that is slidable between a locked position and an unlocked position. The lock 30 also includes a pair of latching rods 81, 82 and an actuation member 84. Movement of the actuation member 84 in a first direction (e.g., first rotational direction) causes the latching rods 81, 82 to move outward to engage with one or more of the ceiling 115 and floor 116. Movement in a second direction (e.g., second rotational direction) causes the latching rods 81, 82 to move inward out of engagement. Movement of the actuation member 84 in the first direction also causes the bolt 83 to move to the locked position, and movement in the second direction to move to the unlocked position.

In some examples as illustrated in Figure 9, the lock 30 includes both a slide bolt 83 and latching rods 81, 82. In another example, the lock 80 includes just one or mor latching rods 81, 82.

The one or more latching rods 81, 82 can be used with various different types of locks 30 that include various types of lock elements.

In some examples, the lock includes a slide bolt that is slidable between a locked position and an unlocked position. The lock is configured to enable the door to open when the slide bolt is in the locked position. This feature includes a delay mechanism to prevent a user from the rear side 22 to quickly unlock the door 20.

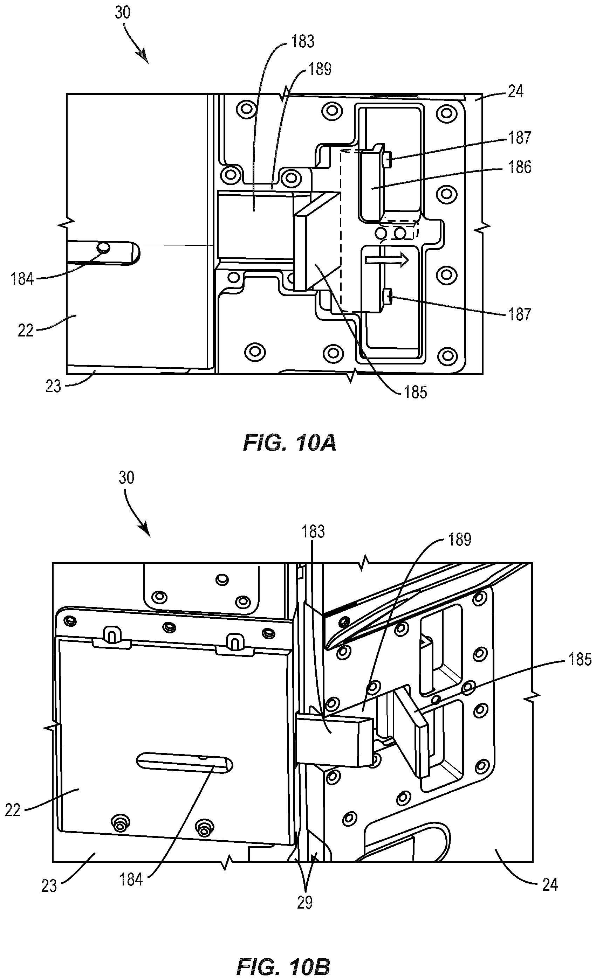

One example is illustrated in Figures 10A-10b. As illustrated in Figure 10A, the lock 30 includes a bolt 183 that is mounted to a first panel 23. The bolt 183 is movable between an unlocked position with the bolt 183 recessed in the first panel 23, and a locked position with the bolt 183 extending into a receptacle 189 in the second panel 24. A handle (not illustrated) on the forward side 21 enables flight personnel to move the bolt 183 between the locked and unlocked positions. A handle 184 extends outward from the bolt 183 and is accessible on the rear side 22 of the door 20. The lock 30 further includes a strike 185 that is pivotally mounted at the receptacle 189 on the rear side 22. A latch member 186 is mounted to the panel 24 at the strike 185 by one or more fasteners 187. The latch member 186 positions the strike 185 at a pivoted position over the bolt 183.

When the latch member 186 is mounted to the panel 24, the strike 185 is positioned over the bolt 183 as illustrated in Figure 10A. Contact between the bolt 183 and the strike 185 prevent the panels 23, 24 from pivoting to the open position. Removal of the latch member 186 allows the strike 185 to pivot away from the bolt 183 as illustrated in Figure 10B. This pivoted position enables the bolt 183 to move past the strike 185 when the panels 23, 24 pivot relative to each other as illustrated in Figure 10B.

The latch member 186 is connected to the panel 24 by one or more fasteners 187. The fasteners 187 can be removed from a person at the rear side 22 of the door 20. This configuration allows for a person in the cabin area on the rear side 22 to open the door 20 when the lock 30 is stuck in the locked position. This structure enables the panels 23, 24 to fold without the bolt 183 being unlocked. This configuration enables the door 20 to be moved to the folded configuration and moved to the stowed position in the event of the slide bolt and/or locking components becomes jammed.

In some examples, the lock 30 includes one or more covers that can be positioned over the lock 30 and secured by fasteners. Removal of the fasteners enables the one or more covers to be pivoted away to allow access.

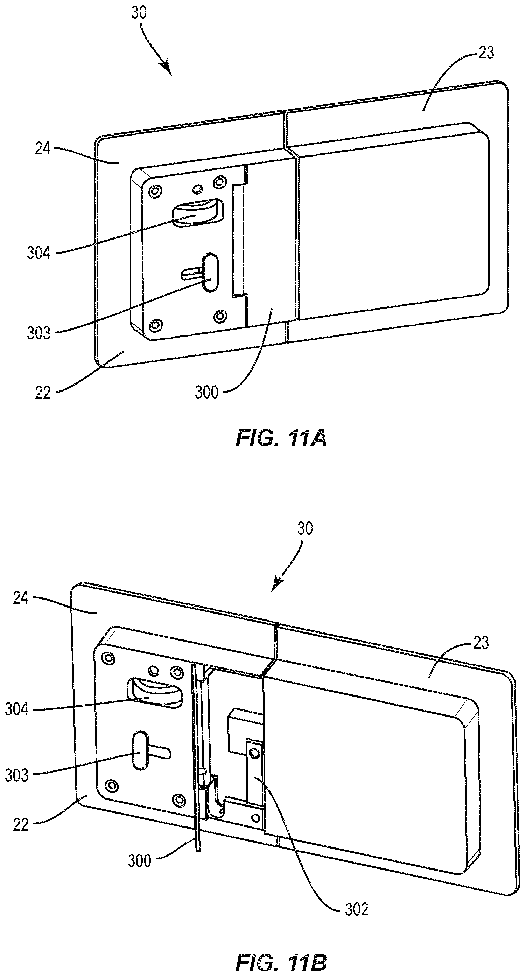

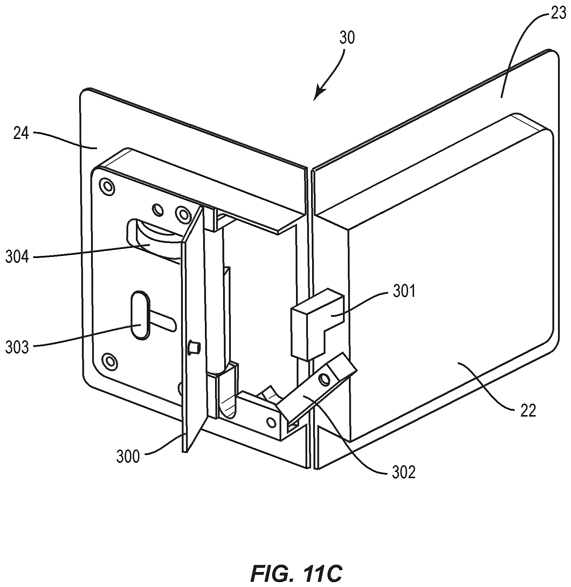

Figures 11A, 11B, and 11C illustrate another example of a lock 30 configured to enable the panels 23, 24 to be pivoted to a folded configuration when the lock 30 is in the locked position. The lock 30 includes a cover plate 300 configured to extend over a strike member 302. The lock 30 includes a rotary hook 301 that engages with the strike member 302 in the locked position (as illustrated in Figure 11B). The lock 30 also includes a slide block 303 and a rotary member 304.

With the door 20 in the deployed position with the panels 23, 24 in an extended configuration, the lock 30 is locked from the forward side 21 of the door 20 by a rotary member (not illustrated) that is connected to and causes the hook 301 to rotate into engagement with the strike member 302. In the locked position as illustrated in Figure 11A, the rear side 22 of the door 20 includes the cover plate 300 extending over to shield the strike member 302 and hook 301.

In the event the lock 30 cannot be moved to the unlocked position (such as by rotating the rotary member on the forward side 21), the lock 30 is configured to disengage to enable the panels 23, 24 to pivot open. As illustrated in Figure 11C, the strike member 302 includes a breakaway half side that is hinged vertically. In the locked position, the breakaway half is upright and nominally blocked by a vertical pin in the cover plate 300. The cover plate 300 is locked from rotating to an open position by the slide block 303. A rotary member 304 is configured to rotate to slowly retract a vertical pin (not shown) which in turn allows the slide block 303 to move. With the slide block 303 moved, the cover plate 300 is released allowing the breakaway half of the strike member 302 to move out of engagement with the hook 301. This release enables the panels 23, 24 to fold together while the rotary hook 301 remains in the locked position. The thread/height of the vertical pin is designed such that the rotary knob 304 is turned multiple times that takes an extended time period (e.g., 5-10) before releasing the slide block 303 and opening the cover plate 300. In some examples, a separate cover (not illustrated) extends over the rotary member 304.

The various locks 30 are configured to enable locking and unlocking from both the forward side 21 and the rear side 22. Unlocking the lock 30 from the rear side 22 takes longer than from the forward side 21. In some examples, the lock 30 can be unlocked immediately from the forward side 21. In some examples, there is a delay when unlocking from the forward side.

In some examples, the lock 30 includes a single engagement mechanism, such as a sliding bolt or rotary mechanism. The engagement mechanism is mounted in a first panel and engages with structure (e.g., receptacle, strike member) on a second panel. In other examples, the lock 30 includes two or more engagement mechanisms. The different engagement mechanisms can include the same or different structure.

In some examples, the door 20 includes a single lock 30. In other examples, the door 20 includes two or more locks 30. The different locks 30 can include the same or different structure.

The panels 23,24 and door 20 can include various sizes and shapes. In some examples, the lock fits within a panel that has a thickness of 0.75 inches.

In some examples, the lock 30 is divided into a first section (e.g., latch side) mounted to a first panel 23 and a second section (e.g., strike side) mounted in a second panel 24. Each section is configured to fit within a substantially 7 inch x 7 inch footprint in the panels 23, 24.

In some examples, the panels 23, 24 fold together and stow with a nominal gap of 0.5 inches. This gap provides for components of the lock 30 that extend outward from the face of one or both panels 23, 24.

In some examples, components of the lock 30 on the rear side 22 of the door 20 do not extend outward from the panels 23, 24 more than 0.375 inches.

The present invention may, of course, be carried out in other ways than those specifically set forth herein without departing from essential characteristics of the invention, as defined in the appended claims. The present embodiments are to be considered in all respects as illustrative and not restrictive, and all changes coming within the meaning and equivalency range of the appended claims are intended to be embraced therein.

In this specification, the non-SI unit "inch" is used, which may be converted to the respective SI- or metric unit according to the following conversion: 1 inch = 25.4 mm = 2.54 cm = 0.0254 m.

## Claims

1. A barrier door system (19) configured to be positioned at an opening (113) within an interior of an aircraft (100), the barrier door system (19) comprising:
a door (20) that is movable between a stowed position away from the opening (113) and a deployed position that extends across the opening (113); and
a lock (30) mounted to the door (20) and configured to lock the door (20) in the deployed position with the lock (30) configured to be immediately movable from a locked position to an unlocked position from a forward side (21) of the door (20) and to delay moving from the locked position to the unlocked position from a rear side (22) of the door.

2. The barrier door system (19) of claim 1, wherein the lock (30) is immediately movable from the unlocked position to the locked position from the forward side (21) of the door (20) and/or the rear side (22) of the door (20).

3. The barrier door system (19) of any of the preceding claims, wherein the lock (30) comprises a rotary mechanism with a gear-reduction and rack/pinion structure with a handle on the rear side (22) of the door (20) that requires multiple rotations to rotate the rotary mechanism to move from the locked position to the unlocked position.

4. The barrier door system (19) of any of the preceding claims, wherein the lock (30) comprises a removable cover plate (300) on the rear side (22) of the door (20) that extends over a handle configured to move the lock (30) from the locked position to the unlocked position, wherein the cover plate (300) is mounted to the door (20) by one or more removable fasteners,
wherein, optionally, the cover plate (300) comprises a slot (74) and the handle (75) is visible through the slot in the unlocked position.

5. The barrier door system (19) of claim 1 or 2, wherein the lock (30) comprises:
a slide bolt (83) that is movable relative to the door (20) between a locked position and an unlocked position;
a handle (75) that is attached to the slide bolt (83) and movable with the slide bolt (83) along a slide axis;
a first rotary member (72) that is rotatable relative to the door (20), the rotary member comprising a slot;
a second rotary member (73) that is connected to the first rotary member (72); and
wherein rotation of the second rotary member (73) causes the first rotary member (72) to rotate relative to the door (20) between a misaligned rotational orientation with the slot misaligned with the slide axis and an aligned rotational orientation with the slot aligned with the slide axis, and
wherein, optionally, the handle is unable to move along the slide axis when the first rotary member (72) is in the misaligned rotational orientation.

6. The barrier door system (19) of claim 5, wherein the handle is a first handle and extends on the rear side (22) of the door (20) and further comprising a second handle (75) that extends on a forward side (21) of the door (20).

7. The barrier door system (19) of claim 5 or 6, wherein the second rotary member (73) is mounted to the rear side (22) of the door (20) and the first rotary member (72) and the slide bolt (83) are mounted within the door (20).

8. The barrier door system (19) of any of claims 5 to 7, wherein the first rotary member (72) is biased towards the misaligned rotational orientation.

9. The barrier door system (19) of any of claims 5 to 8, further comprising a cover plate (300) hingedly mounted to the rear side (22) of the door (20), the cover plate (300) movable between a closed position that extends over the second rotary member (73) and an open position away from the second rotary member (73).

10. The barrier door system (19) of any of claims 5 to 9, further comprising one or more latching rods (81, 82) connected to the lock (30), the one or more latching rods (81, 82) configured to move based on the lock (30) with the latching rods (81, 82) in an extending position that extends outward from the door (20) with the lock (30) in the locked position and a retracted position within the door (20) with the lock (30) is in the unlocked position.

11. The barrier door system (19) of any of the preceding claims, wherein the lock (30) comprises a strike override feature comprising a strike configured to breakaway to move the lock (30) from the locked position to the unlocked position.

12. The barrier door system (19) of any of the preceding claims, wherein the door (20) comprises a plurality of panels (23, 24) that are pivotally connected together and the lock (30) extends between two of the panels (23, 24) to lock the panels (23, 24) together in the locked position,
wherein, optionally, the plurality of panels (23, 24) are movable between a folded configuration and an extended configuration.

13. A barrier door system (19) configured to be positioned at an opening (113) within an interior of an aircraft (100), the barrier door system (19) comprising:
a door (20) comprising a first panel (23) and a second panel (24) with the door (20) movable between a stowed position away from the opening (113) and a deployed position that extends across the opening (113);
a lock (30) mounted to the door (20), the lock (30) comprising:
one or more forward lock elements (40) positioned at a forward side (21) of the door (20);
one or more rear lock elements (50) positioned at a rear side (22) of the door (20);
wherein each of the one or more forward lock elements (40) and the one or more rear lock elements (50) are configured to move the lock (30) between a locked position and an unlocked position; and
wherein the one or more forward lock elements (40) are configured to move the lock (30) from the locked position to the unlocked position faster than the one or more rear lock elements (50).

14. The barrier door system (19) of claim 13, wherein the one or more forward lock elements (40) are configured to move the lock (30) from the locked position to the unlocked position without a delay, and/or
wherein the lock (30) further comprises a slide bolt (83) that is movable relative to the first panel (23) and the second panel (24).

15. A barrier door system (19) configured to be positioned at an opening (113) within an interior of an aircraft (100), the barrier door system (19) comprising:
a door (20) comprising a forward side (21) that faces towards a flight deck (110) of the aircraft (100) and a rear side (22) that faces towards a cabin area (103) of the aircraft (100);
a lock (30) mounted to the door (20), the lock (30) comprising:
one or more forward lock elements (40) that are exposed on the forward side (21) of the door (20) and configured to move the lock (30) from a locked position to an unlocked position;
one or more rear lock elements (50) on the rear side (22) of the door (20) and configured to move the lock (30) from the locked position to the unlocked position; and
a shield positioned on the rear side (22) of the door (20) that extends over the one or more rear lock elements (50), wherein the shield is movable between a first position to prevent operation of the one or more rear lock elements (50) and a second position to enable operation of the one or more rear lock elements (50).
